# EUROPEAN PATENT APPLICATION

(11) **EP 1 326 411 A1**
(43) Date of publication of application: **09.07.2003**
(21) Application number: 02250070.6
(22) Date of filing: 07.01.2002
(51) Int. Cl.: H04M 1/66

(54) **Telecommunication device and method to discriminate between types of incoming phone calls**

(71) Applicant: LUCENT TECHNOLOGIES INC., Murray Hill, New Jersey 07974-0636 (US)
(72) Inventor: Bocconi, Stefano, 1082 JV Amsterdam (NL)
(74) Representative: Sarup, David Alexander

(57) **Abstract**

Telecommunication device including processing means, memory means, display means, transceiver means, entry means for entering information, the processing means being connected to the memory means, the display means, the transceiver means and the entry means for entering information, respectively, the telecommunication device being arranged, in use, to communicate through a telecommunication network and to receive a destination code in a request for connection from an incoming phone call of a calling party over the network, wherein the destination code comprises at least a subscription number code and a category code, the telecommunication device being arranged to use the category code for discriminating between types of incoming phone calls.

## Description

### Field of the invention

The present invention relates to a telecommunication device as defined in the preamble of claim 1.

### Prior art

The use of a single telephone for receiving both private and business telephone calls is regarded as undesirable by most users of such a telephone. During working hours the user obviously will accept business calls, but after working hours he/she may wish to receive only private calls. Receiving a business call after working hours is often regarded as an incursion on one's privacy. Also, the reception of a private call during working hours or during a particular period of the day may be undesirable.

Of course, the user is possibly willing to accept a business or private call at any time of the day under some circumstances. For example, the user may want to answer a specific business call after working hours (maybe in case of emergency), or if such a call is related to a particular client or case. Also, some private calls may need to be answered during working hours.

From the prior art, solutions to separate private and business calls are known. The separation of private and business calls (or even more types of incoming calls) is achieved in a number of ways:
- Users may have two or more (mobile) telephones, each with its own subscription number for the respective type of phone call,
- Users may utilise a telephone equipped with two or more subscription numbers, e.g. by using ISDN technology or a GSM telephone with multiple SIM cards,
- Users may have two or more (PSTN) telephone lines with different subscription numbers,
- Users may apply call-recognition by using the caller-ID of an incoming phone call by an audible, visible or other notification, e.g. as used in GSM telephones.

Disadvantageously, the first three methods from the prior art are relatively costly, since additional equipment or line resources are necessary. Also, the actual overall efficiency of such additional equipment or line resources may be low. The fourth method may be very time-consuming (and costly), since every phone number of a potential caller must be entered into a memory of the user's phone and categorised to enable identification by caller-ID as a private or business caller. Moreover, when the caller-ID is not provided to the network by the caller (for example, if the user dials *31# before the phone number), no information about the caller is available.

### Summary of the invention

It is an object of the present invention to provide a separation between private and business (and other) phone calls which can be handled by a single (mobile) telephone.

The present invention relates to a telecommunication device as defined in the preamble of claim 1, characterised in that
the destination code comprises at least a subscription number code and a category code, the telecommunication device being arranged to use the category code for discriminating between types of incoming phone calls.

Advantageously, the telecommunication device as described above offers a simple, fast and relatively low-cost possibility to have a single (mobile) telephone to receive both private and business phone calls, by distributing the incoming calls into two or more categories.

The present invention allows a user to define at least two categories as desired.

By categorising an incoming call, sorting the incoming call by category, and presenting the call according to rules set up for its specific category, the arrangement of the present invention offers a user a choice to answer only those incoming calls that correspond to a specific category.

When the user informs another person of his telephone number, the user may tell the other to add a category code to the phone number (i.e., to be dialled after the phone number). In this way, the user can be certain that at a later time, an incoming call of that other person containing that category code will be placed in the right category. The other person obtains certain access privileges when calling the user, depending on the actual process action the user defines for that specific category code. For example, incoming phone calls with a high privilege level may be directly put through to the user, while incoming calls with low privileges (or none) may be diverted to an answering machine or a voice-mail service.

In a further embodiment, the telecommunication device of the present invention provides a time-scheduling, based on category-coding, which enables the reception of incoming calls of specific categories only within a predetermined time-slot. Thus, a user is offered a choice to divert or block incoming calls of specific categories during a certain timeslot.

Moreover, the present invention relates to a method as defined in claim 8, characterised in that the destination code comprises at least a subscription number code and a category code, the method comprising the step of using the category code for discriminating between types of incoming phone calls.

Moreover, the present invention relates to a computer program product as defined in claim 9, characterised in that the destination code comprises at least a subscription number code and a category code, the computer program product after being loaded allowing the telecommunication device to use the category code (55) for discriminating between types of incoming phone calls.

The present invention also relates to a data carrier provided with the computer program product as defined above.

### Brief description of drawings

Below, the invention will be explained with reference to some drawings, which are intended for illustration purposes only and not to limit the scope of protection as defined in the accompanying claims.
Figure 1 shows a schematic layout of a network in which a telecommunication device according to the present invention is used;
Figure 2 shows a schematic layout of the telecommunication device according to the present invention;
Figure 3 shows a schematic representation of a destination code field to be used in accordance with the telecommunication device and method of the present invention;
Figure 4 shows a flow diagram for a procedure to be carried out by the processing means of the telecommunication device according to the present invention to process an incoming phone call.

### Description of preferred embodiments

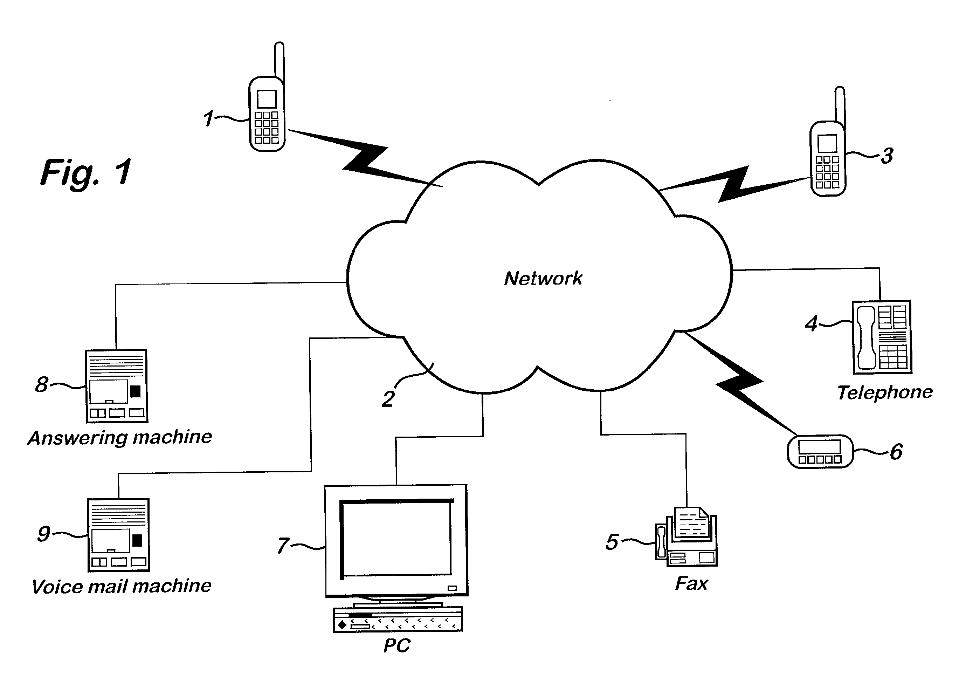

Figure 1 shows a schematic layout of a network in which a telephone according to the present invention is used.

This network 2 comprises a plurality of telecommunication devices such as telephone devices 1, 3, 4, facsimile machines 5, pagers 6, computers 7, answering machines 8, voice mail services 9, etc. The network 2 provides connections to the telecommunication devices 1, 3, 4, 5, 6, 7, 8, 9. The network connections may be wired or wireless. In Figure 1, the telephone 1 according to the present invention is connected to the network 2 by a wireless connection, but a wired connection may be applied also.

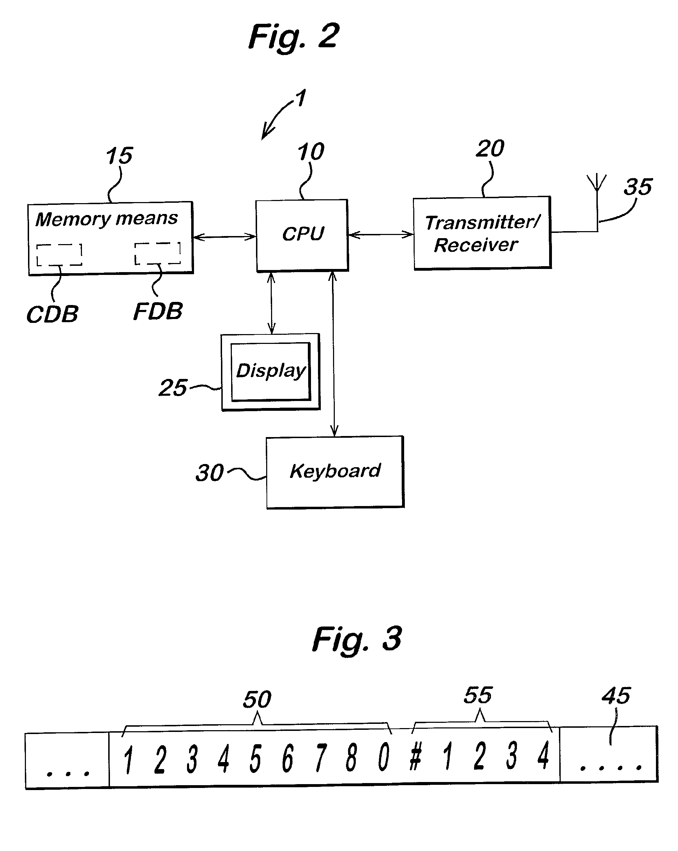

Figure 2 shows a schematic layout of the telephone 1 according to the present invention.

The telephone 1 comprises processing means 10, memory means 15, transceiver means 20, display means 25 and input means 30. The processing means 10 are connected to the memory means 15, to the transceiver means 20, to the display means 25 and to the input means 30, respectively.

The memory means 15, which store instructions and data, may comprise RAM 22, (E)EPROM 23, and ROM 24. However, it should be understood that there may be provided more and/or other memory units known to persons skilled in the art.

The transceiver means 20 provide a connection to the wireless network 2 through an antenna 35 for transmitting and receiving telecommunication data.

The display means 25 are arranged to display to a user information relating to the telephone's functions, for example, information about a calling party. Also, the display means may comprise devices capable of providing audible signals (e.g., synthesised speech, tones) or tactile signals to the user.

The input means 30 are arranged for a.o. the entry of phone numbers and control of the telephone's functions. The input means 30 may be a keyboard or any other suitable input device.

The telephone 1 according to the present invention is capable to discriminate between various categories of incoming phone calls such as private and business calls. The user of telephone 1 can define a plurality of categories for his incoming phone calls. Each category is represented by a category code. The processing means 10 are arranged to receive user-input, which comprises the category codes of his choice. Further, the processing means 10 are arranged to store the category codes in a category database CDB in the memory means 15.

Also, the processing means 10 are arranged to receive user-input, which defines for each category the actual process action to be carried out, when a phone call of the respective category is received. Many process actions are imaginable in this respect: for example, a process action may be defined as a rule-set that describe the period of the day that a categorised phone call may be answered directly, or may be diverted to an answering machine or a voice-mail service. Also, a process action may be defined to present an interactive menu to the user for processing an incoming call. Even a process action to send a busy signal to the calling party is conceivable. The process actions are stored in the memory means 15, for example, within the category database CDB or in a process action database PDB linked to the category database CDB.

Furthermore, the processing means 10 are arranged to receive user-input, which defines the actual access rights for each defined category as desired by the user. Preferably, the present invention enables the user to set the access rights at any desired instant. Also in a further preferred embodiment the present invention provides the option to set access rights as a function of time.

For example, each category can have different process actions associated with a status code, having values of say 1, 2, 3. If the telephone at a certain instant is set up by the user (the called party) to have a status value of 1, a process action associated with that status value 1, is executed for the category code of the incoming phone call. Value 1 for the telephone could be a more permissive status (the called party is freely available), and value 3 could be a most restrictive status (the called party is very busy). In this way every status value has a different treatment based on the user availability, for example some can get through to the called party even at status value 3 given the actual category code added to the phone number, while others can not since they do not have the proper category code. The user definable status value establishes the access rights and can be a function of time.

When the user informs another person of his telephone number, the user may tell the other to add a category code to the phone number (to be dialled after the number). In this way, the user can be certain that at a later time, an incoming call of that other person with the category code will be placed in the right category. Accordingly, the other person obtains certain access privileges when calling the user, depending on the actual filter (i.e., the status code as described above) the user may define for that specific category code. The processing means 10 are arranged to receive that category code when a phone call comes in, and to process the incoming call according to the filter procedure being operative for that category code at the time of the call.

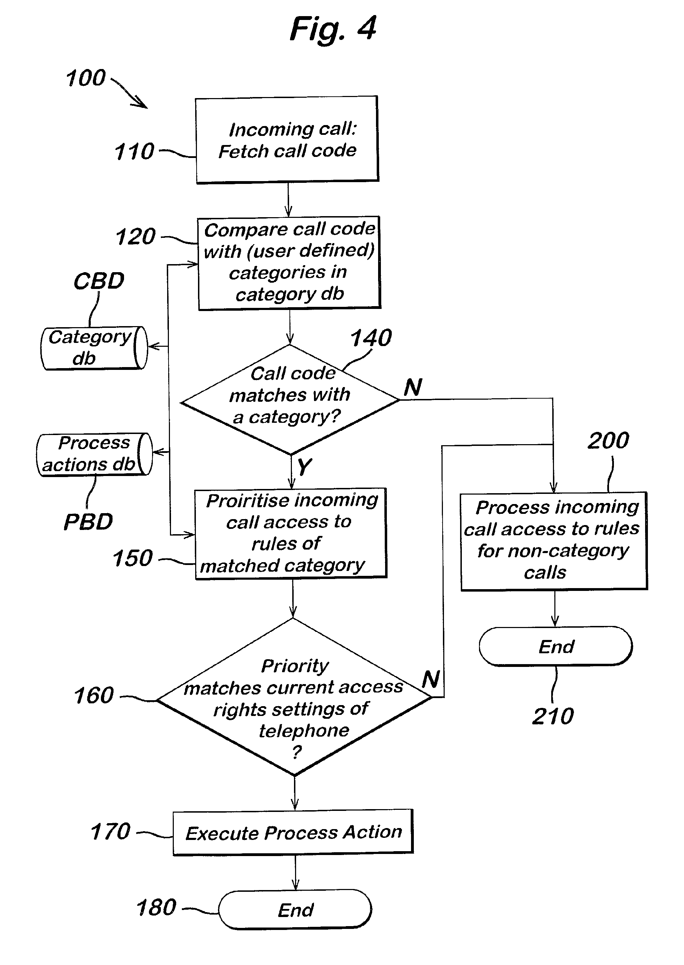

In Figure 3 the concept of the category code and its application according to the present invention will be described in more detail. In Figure 4 the method of discriminating between categories of incoming phone calls and the subsequent processing of an incoming phone call will be explained further.

Figure 3 shows a schematic representation of a destination code 45 to be used in accordance with the telecommunication device and method of the present invention.

During the set-up of a telecommunication connection between two parties, a request for a connection is sent over the telecommunications network 2 from a calling party's phone 3 to a called party's phone 1. In the request for connection a destination code 45 is embedded, which comprises the subscription number of the called party's phone 1.

In the present invention the category code 55 is added to the subscription number. Accordingly, the destination code 45 is extended with the category code being used as a called party subaddress.

The destination code 45 as applied in the present invention, is shown schematically in Figure 3, and comprises the subscription number 50 and the category code 55. Here the subscription number 50 is shown as a 10-digit number, but it may comprise another number of digits. The category code 55 is shown here as a code comprising a delimiter "#" and a 4-digit code. It is noted that the category code 55 may have a different form, possibly with another delimiter or without delimiter, and/or may have a different number of digits.

Currently, telecommunication network systems can be instructed not to change (the contents of) destination codes 45 and let the complete code pass to its destination without any filtering. Thus, a destination code extended as explained above can be transferred over the network 2 to the called party's telephone 1 without any modification of the destination code 45. Also, entering an subscription number 50 followed by a category code 55, such as shown in Figure 3, may be done by any known modern telephone 3, 4.

In a preferred embodiment, the telephone 1 according to the present invention is a mobile telephone and uses GSM (Global System for Mobile Communication) technology.

In GSM networks the protocol used to send call control messages between the Mobile Station (mobile telephone) and the Base Station Subsystem (the air interface) is based on ITU Q.931 "Implementors' Guide (03/99) for Recommendation Q.931 (05/98)", as published by the International Telecommunication Union, Geneva, Switzerland, http://www.itu.int.

This protocol is used with minor modifications by the Connection Management sublayer (CM) of the GSM layer 3 at the air interface.

Originally, ITU Q.931 is the protocol used for ISDN (Integrated Services Digital Network), and in this protocol a Called Party Information Element is defined. Following the recommendation of ITU Q.931, the category code 55 to identify the caller can be included in the called party number or in the called party subaddress which is not interpreted by the network, as mentioned in the document.

Since the destination code 45 will be received by the telephone without any modification, the telephone 1 according to the present invention is thus capable of discriminating between different types of incoming phone calls based on the received category code 55.

It is noted that the telephone 1 according to the present invention is not restricted to use GSM technology, but may use other telecommunication protocols such as ISDN and others that comprise similar destination codes 45.

Figure 4 shows a flow diagram for a procedure to be carried out by the processing means 10 of telephone 1 according to the present invention to process an incoming phone call.

When a request for connection 1 is sent to the telephone 1 according to the present invention, the telephone 1 will receive a number of network-related codes which comprises the destination code 45. Upon reception of such network-related codes, the processing means 10 execute procedure 100 to retrieve the category of the incoming phone call from the destination code 45 and to process the call according to the rights for the particular category code 55.

In step 110 of procedure 100, the processing means 10 receive a request for connection, which comprises the destination code 45. The processing means 10 fetch both subscription number 50 and category code 55, and preferably store these as received subscription number and received category code, respectively, in the memory means 15. If no category code 55 is received (for example, because the calling party was not aware of this category code), the processing means 10 may store a "non-category" value as received category code in memory means 15.

Next, in a step 120 the processing means 10 compare the received category code with the user-defined categories previously stored in the category database CDB in the memory means 15.

In a step 140, the processing means 10 evaluate if a match has occurred between the received category code and the stored user-defined category codes. If a valid match is found, the procedure continues in a step 150. If no match or a "non-category" code was established, the procedure will continue in a step 200.

In step 150, the processing means 10 determine the access rights for the incoming call. For the received category code determined in the steps 110-140 the processing means 10 retrieve the corresponding process action, previously defined by the user, from the memory means 15. The definition of such process actions has been described with reference to Figure 2.

In a next step 160, the processing means 10 compare the retrieved process action with the current access rights set up by the user. The definition of such access rights has been described with reference to Figure 2.

If the rule-set of the retrieved process action matches the current access rights, the procedure continues in a step 170. Otherwise, step 200 will be executed.

In step 170 the processing means 10 execute the process action. Depending on the access rights defined by the category code for the incoming phone call, the processing means 10 may handle the incoming phone call in various ways: hand over to another phone (e.g., a colleague or a personal assistant), to a voice-mail service, or directly establish a connection for the incoming phone call by acknowledging the request for connection in a way known to persons skilled in the art.

In a next step 180, the incoming phone call is in progress. The procedure 100 ends here.

If, in step 140, no match is found between the received category code 55 and the category codes stored in CDB, or if, in step 160, the rule of the process action does not match the current access rights, the processing means 10 execute step 200.

In this step 200 the incoming phone call is processed according to the rules set up for the category of the incoming call (non-category). Depending on the established rule, the processing means 10 may execute the sending of a busy signal to the calling party, or the processing means 10 may execute an interactive procedure for the user which offers a choice to the user how to process the incoming phone call. Alternatively, the processing means 10 may divert the incoming phone call to an answering machine 8 or a voice-mail service 9. It will be appreciated that other rule-based action by the processing means 10 is possible.

Next, the procedure ends in step 210.

It is noted that the present invention can also be applied to devices that can perform telephony functions like e.g., suitably equipped personal computers 7.

Also, it is noted that in a further preferred embodiment the processing means 10 are arranged to receive user-input for time-based filtering rules, which define timeslots for categories of incoming phone calls. In that case, the processing means 10 are arranged to determine the local time, for example, by using a clock device connected to the processing means 10, or by retrieving time-information over the network 2. In step 160 of procedure 100, the processing means 10 may check the current access rights as a function of time. Similarly, in step 200 processing of an incoming phone call may depend on the actual local time.

## Claims

1. Telecommunication device (1) comprising processing means (10), memory means (15), display means (25), transceiver means (20), entry means (30) for entering information, said processing means (10) being connected to said memory means (15), said display means (25), said transceiver means (20) and said entry means (30) for entering information, respectively, said telecommunication device (1) being arranged, in use, to communicate through a telecommunication network (2) and to receive a destination code (45) in a request for connection from an incoming phone call of a calling party over said network (2),
**characterised in that**
said destination code (45) comprises at least a subscription number code (50) and a category code (55), said telecommunication device (1) being arranged to use said category code (55) for discriminating between types of incoming phone calls.

2. Telecommunication device (1) according to claim 1, **characterised in that** said processing means (10) are arranged to carry out, in use, the following steps:
- to extract said category code (55) from said destination code (45);
- to match said category code (55) with stored category codes (CDB) stored in said memory means (15);
- to execute a process action on said incoming phone call based on said match of stored process actions (PDB) stored in said memory means (15).

3. Telecommunication device (1) according to claim 2, **characterised in that** said process actions comprise at least one of the following steps:
- to make a connection for said incoming phone call;
- to send a busy signal to said calling party;
- to execute an interactive procedure for a user of said telecommunication device (1) for processing said incoming phone call;
- to divert said incoming phone call to an answering machine (8) or a voice-mail service (9).

4. Telecommunication device (1) according to claim 2 or 3, **characterised in that** said process actions comprise time-related actions to execute on said incoming phone call.

5. Telecommunication device (1) according to claim 2, **characterised in that** said processing means (10) are arranged, in use, to carry out the following steps:
- to receive user-input from said entry means (30) for entering information, said user-input comprise either a category code definition, or a process action definition;
- to store said category code definition in said stored category codes (CDB);
- to store said process action definition in said stored process actions (PDB).

6. Telecommunication device (1) according to claim 2, **characterised in that** said stored category codes (CDB) comprise either one of at least one type of an incoming phone call or a "non-category" type.

7. Telecommunication device (1) according to any preceding claim, **characterised in that** said types of an incoming phone call comprise at least one of the following types:
- private call,
- business call.

8. Method to be performed by a telecommunication device (1) comprising processing means (10), memory means (15), display means (25), transceiver means (20), entry means (30) for entering information, said processing means (10) connected to said memory means (15), said display means (25), said transceiver means (20) and said entry means (30) for entering information, respectively, said telecommunication device (1) being arranged, in use, to communicate through a telecommunication network (2) and to receive a destination code (45) in a request for connection from an incoming phone call of a calling party over said network (2), **characterised in that**
said destination code (45) comprises at least a subscription number code (50) and a category code (55), said method comprising the step of using said category code (55) for discriminating between types of incoming phone calls.

9. A computer program product to be loaded by a telecommunication device (1) comprising processing means (10), memory means (15), display means (25), transceiver means (20), entry means (30) for entering information, said processing means (10) connected to said memory means (15), said display means (25), said transceiver means (20) and said entry means (30) for entering information, respectively, said telecommunication device (1) being arranged, in use, to communicate through a telecommunication network (2), said computer program product after being loaded allowing said processing means (10) to receive, in use, a destination code (45) in a request for connection from an incoming phone call of a calling party over said network (2), **characterised in that**
said destination code (45) comprises at least a subscription number code (50) and a category code (55), said computer program product after being loaded allowing said telecommunication device to use said category code (55) for discriminating between types of incoming phone calls.

10. A data carrier with a computer program product as claimed in claim 9.
